# EUROPÄISCHE PATENTSCHRIFT

(11) **EP 2 735 656 B1**
(45) Veröffentlichungstag und Bekanntmachung des Hinweises auf die Patenterteilung: **29.12.2021**
(21) Anmeldenummer: 13191525.8
(22) Anmeldetag: 05.11.2013
(51) Int. Cl.: E02F 9/22, F02N 7/08, B60K 6/46, B60W 10/30, E02F 9/20, F02N 7/00, F02N 11/08, F15B 1/02, B60K 6/12

(54) **ANTRIEBSSTRANG EINES FAHRZEUGS**
DRIVE TRAIN OF A VEHICLE
CHAÎNE CINÉMATIQUE D'UN VÉHICULE

(30) Priorität: 22.11.2012 DE 102012111295
(43) Veröffentlichungstag der Anmeldung: 28.05.2014
(73) Patentinhaber: Linde Hydraulics GmbH & Co. KG, 63743 Aschaffenburg (DE)
(72) Erfinder: Krittian, Lukas, 63739 Aschaffenburg (DE); Steigerwald, Martin, 63864 Glattbach (DE); Oberhäußer, Martin, 63743 Aschaffenburg (DE); Langen, Dr., Alfred, 63762 Großostheim (DE)
(74) Vertreter: Patentship Patentanwaltsgesellschaft mbH

(56) Entgegenhaltungen:
- EP-A1- 2 570 381
- WO-A1-2011/140972
- WO-A1-2012/125798
- DE-A1-102009 001 602
- JP-A- S5 923 064
- JP-A- 2006 037 820
- JP-A- 2007 224 737
- JP-A- 2013 091 953
- US-A1- 2012 077 632

## Beschreibung

Die Erfindung betrifft Fahrzeug, insbesondere mobile Arbeitsmaschine, mit einem Antriebsstrang, der aus mit einem Verbrennungsmotor und einem von dem Verbrennungsmotor angetriebenen Fahrantrieb sowie einem von dem Verbrennungsmotor angetriebenen Arbeitshydrauliksystem besteht, wobei das Arbeitshydrauliksystem mindestens eine von dem Verbrennungsmotor angetriebene Hydraulikpumpe aufweist, die als Pumpe und Motor betreibbar ist, wobei die Hydraulikpumpe im Pumpenbetrieb mit einer Saugseite Druckmittel aus einem Behälter ansaugt und in eine zu dem Arbeitshydrauliksystem geführte Förderleitung fördert und wobei der Hydraulikpumpe im Motorbetrieb, in der die Hydraulikpumpe als hydraulischer Starter einer Start-Stopp-Funktion zum Starten des Verbrennungsmotors ausgebildet ist, an der Saugseite Druckmittel aus einem Druckmittelspeicher zuführbar ist, wobei an die zu dem Arbeitshydrauliksystem geführte Förderleitung der Hydraulikpumpe eine zu dem Druckmittelspeicher geführte Verbindungsleitung angeschlossen ist, wobei in der Verbindungsleitung ein selbsttätig und druckabhängig in Richtung zum Druckmittelspeicher öffnendes Sperrventil, insbesondere ein in Richtung zum Druckmittelspeicher öffnendes Rückschlagventil, angeordnet ist und der Verbindungsleitung zwischen dem Sperrventil und dem Druckmittelspeicher ein Druckbegrenzungsventil zugeordnet ist, das den im Druckmittelspeicher anstehenden Ladedruck absichert.

Mobile selbstfahrende Arbeitsmaschinen, insbesondere Flurförderzeuge, Landmaschinen, Forstmaschinen und Baumaschinen, beispielsweise Bagger, Rad-und Teleskoplader, Schlepper, Mähdrescher, Feldhäcksler, Zuckerrüben- oder Kartoffelroder, weisen einen Antriebsstrang mit einem Verbrennungsmotor auf, der einen Fahrantrieb und ein Arbeitshydrauliksystem für die Arbeitsfunktionen der Arbeitsmaschine antreibt. Zur Versorgung des Arbeitshydrauliksystems mit Druckmittel ist mindestens eine von dem Verbrennungsmotor angetriebene Hydraulikpumpe vorgesehen.

Während eines Leerlaufbetriebs, in dem der Fahrantrieb und das Arbeitshydrauliksystem nicht betätigt sind und somit von dem Verbrennungsmotor keine Drehmomentanforderung angefordert wird, wird der Verbrennungsmotor auf einer unteren Leerlaufdrehzahl betrieben. Ein derartiger Leerlaufbetrieb findet in Arbeitspausen oder während Arbeitsunterbrechungen statt.

Um den Kraftstoffverbrauch während Arbeitspausen oder Arbeitsunterbrechungen zu verringern, ist es bereits bekannt, eine sogenannte Start-Stopp Funktion für den Verbrennungsmotor vorzusehen, bei der der unbelastete Verbrennungsmotor in Arbeitspausen oder bei Arbeitsunterbrechungen abgeschaltet wird und bei einer Drehmomentanforderung durch eine Arbeitsfunktion oder den Fahrantrieb automatisch wieder gestartet wird. Das Abschalten und der nachfolgende Neustart des Verbrennungsmotors erfolgt hierbei auch bei relativ kurzen Leerlaufzeiten, so dass der Startvorgang des Verbrennungsmotors entsprechend häufig im Betrieb der Arbeitsmaschine auftritt. Dies stellt hohe Anforderungen an die Startereinrichtung des Verbrennungsmotors hinsichtlich der Dauerfestigkeit und der Bereitstellung der erforderlichen Startenergie zum Starten des Verbrennungsmotors.

Bei Verbrennungsmotoren, beispielsweise Diesel- oder Ottomotoren, werden in der Regel elektromotorisch betriebene Startereinrichtungen eingesetzt, mit denen zum Start des abgestellten Verbrennungsmotor die zum Selbstlauf des Verbrennungsmotors benötigte Drehzahl mit einem elektrischen Startermotor erzeugt wird, der über ein Getriebe mit der Kurbelwelle des Verbrennungsmotors verbunden ist. Das Getriebe ist in der Regel von einem Ritzel an der Abtriebswelle des elektrischen Startermotors und einem Zahnkranz an der Kurbelwelle des Verbrennungsmotors gebildet und weist ein hohes Übersetzungsverhältnis auf, so dass ein schnelllaufender und klein bauender elektrischer Startermotor verwendet werden kann.

Bei bekannten elektromotorisch betriebenen Startereinrichtungen mit einem schnelllaufenden und klein bauenden elektrischen Startermotor fließen zum Starten des Verbrennungsmotors kurzzeitig sehr hohe Ströme, um das zum Starten des Verbrennungsmotors erforderliche Drehmoment aufzubringen. Die zum Starten des Verbrennungsmotors auftretenden Ströme haben einen erheblichen Temperaturanstieg zufolge. Sofern der Verbrennungsmotor für eine Start-Stopp Funktion in kurzen Intervallen gestartet werden soll, führt dieses Betriebsverhalten bekannter elektromotorisch betriebener Startereinrichtungen zu einem Überhitzen und somit zu einem Ausfall des elektrischen Startermotors und somit der elektromotorisch betriebenen Startereinrichtung. Um eine derartige konventionelle elektromotorisch betriebene Startereinrichtung mit einem elektrischen Startermotor für eine Start-Stopp-Funktion in kurzen Intervallen betätigen zu können, ist das Spannungsniveau der elektrischen Spannung anzuheben und der elektrische Startermotor entsprechend dauerfest auszuführen, wodurch jedoch der Bauaufwand und der Herstellungsaufwand stark ansteigen.

Bei mobilen Arbeitsmaschinen erfordert zudem während des Startvorgangs des Verbrennungsmotors die im Antriebsstrang angeordnete Hydraulikpumpe des Arbeitshydrauliksystems zusätzliche Energie. Bereits vorhandene elektromotorische, getriebeuntersetzte Starteinrichtungen des Verbrennungsmotors sind daher nicht geeignet, eine Start-Stopp Funktion mit entsprechender Dauerfestigkeit und der erforderlicher Startenergie in wirtschaftlicher Weise herzustellen.

Bei gattungsgemäßen Antriebssträngen einer mobilen Arbeitsmaschine werden daher hydrostatische Triebwerke als hydraulische Starter des Verbrennungsmotors für eine Start-Stopp-Funktion eingesetzt, die mit der Kurbelwelle des Verbrennungsmotors trieblich verbunden sind und mit Druckmittel aus einem Druckmittelspeicher bei einem Startvorgang des Verbrennungsmotors betrieben werden. Aus der DE 10 2011 105 006 A1 ist ein Antriebsstrang bekannt, bei dem zusätzlich zu der Hydraulikpumpe des Arbeitshydrauliksystems ein weiterer Hydraulikmotor als Starter des Verbrennungsmotors für eine Start-Stopp-Funktion des Verbrennungsmotors vorgesehen ist. Da ein derartiger zusätzlicher Hydraulikmotor im Antriebsstrang im normalen Betrieb von dem laufenden Verbrennungsmotor mitgeschleppt wird, entstehen Verluste, die den Gesamtwirkungsgrad der Arbeitsmaschine herabsetzen.

Aus der JP 2007-224737 A (Figuren 4-9) ist Antriebsstrang mit einem hydraulischen Starter eines Motors bekannt, der von einem zusätzlichen Hydrauliktriebwerk gebildet ist. Das Hydrauliktriebwerk kann als Pumpe und Motor betrieben werden und ist nur für die Funktion als hydraulischer Starter des Motors vorgesehen. Im Pumpenbetrieb saugt das Hydrauliktriebwerk Druckmittel aus einem Behälter und fördert in eine Förderleitung, die zu einem Druckmittelspeicher geführt ist. Im Motorbetrieb zum Start des Motors wird dem Hydrauliktriebwerk an der Saugseite Druckmittel aus dem Druckmittelspeicher zugeführt. Die Förderseite des Hydrauliktriebwerks ist im Motorbetrieb des Hydrauliktriebwerks über ein Ventil mit dem Behälter verbunden. Im Motobetrieb des Hydrauliktriebwerks verhindert ein Sperrventil in der Förderleitung, dass sich der Druckmittelspeicher zu der Förderseite des Hydrauliktriebwerks entleert.

Um den Aufwand für einen zusätzlichen Hydraulikmotor bzw. ein zusätzliches Hydrauliktriebwerk als Starter des Verbrennungsmotors zu vermeiden, ist es aus gattungsgemäßen Antriebssträngen mit einer Start-Stopp-Funktion bekannt, die bereits vorhandene Hydraulikpumpe des Arbeitshydrauliksystems als hydraulischen Starter des Verbrennungsmotors zu nutzen, in dem die Hydraulikpumpe als Motor betrieben wird, der Druckmittel aus einem Druckmittelspeicher an der Saugseite zugeführt wird. Derartige gattungsähnliche Antriebsstränge sind aus den Figuren 1, 2 der WO 2012/125798 A1 bekannt. Zum Laden des Druckmittelspeichers ist bei der WO 2012/125798 A1 in der von der Hydraulikpumpe des Arbeitshydrauliksystems zu dem Arbeitshydrauliksystem führenden Förderleitung ein als Proportionalventil ausgebildetes elektrisch betätigtes Ladeventil angeordnet, das die Förderleitung androsselt. Stromauf des Ladeventils ist an die Förderleitung eine zu dem Druckmittelspeicher geführte Verbindungsleitung angeschlossen, in der ein elektrisch betätigtes Sperrventil angeordnet ist. Das elektrisch betätigte Sperrventil wird zum Laden des Druckmittelspeichers in eine Durchflussstellung angesteuert und bei Erreichen eines bestimmten Speicherladedruckes, der mittels eines Drucksensors überwacht wird, zurück in die Sperrstellung betätigt, um den Druckmittelspeicher abzusperren. Ein derartiges elektrisch betätigtes Sperrventil in der die Förderleitung mit dem Druckmittelspeicher verbindenden Verbindungsleitung verursacht jedoch einen hohen Bauaufwand und Platzbedarf. Zudem kann es bei einer Funktionsstörung des elektrisch betätigten Sperrventils, beispielsweise einem Verklemmen in der Durchflussstellung, zu einem Aufladen des Druckmittelspeichers auf unzulässig hohe Speicherladedrücke kommen.

Aus der WO 2011/140972 A1 ist ein gattungsgemäßes Fahrzeug mit einem Antriebsstrang bekannt, der aus einem Verbrennungsmotor und einem von dem Verbrennungsmotor angetriebenen Fahrantrieb sowie einem von dem Verbrennungsmotor angetriebenen Arbeitshydrauliksystem besteht, wobei das Arbeitshydrauliksystem mindestens eine von dem Verbrennungsmotor angetriebene Hydraulikpumpe aufweist, die als Pumpe und Motor betreibbar ist, wobei die Hydraulikpumpe im Pumpenbetrieb mit einer Saugseite Druckmittel aus einem Behälter ansaugt und in eine zu dem Arbeitshydrauliksystem geführte Förderleitung fördert und wobei der Hydraulikpumpe im Motorbetrieb an der Saugseite Druckmittel aus einem Druckmittelspeicher zuführbar ist, wobei an die zu dem Arbeitshydrauliksystem geführte Förderleitung der Hydraulikpumpe mittels eines elektrisch betätigten Umschaltventils eine zu dem Druckmittelspeicher geführte Verbindungsleitung anschließbar ist.

Der vorliegenden Erfindung liegt die Aufgabe zugrunde, ein Fahrzeug mit einem Antriebsstrang der eingangs genannten Gattung zur Verfügung zu stellen, das hinsichtlich des Bauaufwandes und des Platzbedarfes für eine Ladeschaltung des Druckmittelspeichers verbessert ist und eine wirksame Absicherung des Speicherladedruckes aufweist.

Diese Aufgabe wird erfindungsgemäß dadurch gelöst, dass die Hydraulikpumpe zur Versorgung einer hydraulischen Lenkungsvorrichtung vorgesehen ist und der Förderseite der Hydraulikpumpe ein Prioritätsventil zur bevorzugten Versorgung der Lenkungshydraulik zugeordnet ist, an das ausgangsseitig die Förderleitung des Arbeitshydrauliksystem angeschlossen ist. Erfindungsgemäß ist somit in der von der Förderleitung zu dem Druckmittelspeicher geführten Verbindungsleitung, über die das Laden des Druckmittelspeichers aus der Förderleitung des Arbeitshydrauliksystems erfolgt, ein einfach aufgebautes, selbsttätig und druckabhängig öffnendes bzw. sperrendes Sperrventil, bevorzugt ein einfaches Rückschlagventil, angeordnet, das einen geringen Bauaufwand verursacht und weiterhin einen geringen Bauaufwand aufweist. Mit einem derartigen Sperrventil kann auf einfache Weise in der Öffnungsstellung des Sperrventils der Druckmittelspeicher mit Druckmittel aufgeladen werden und nach dem Ladevorgang der mit Druckmittel aufgeladene Druckmittelspeicher in der Sperrstellung des Sperrventils abgesperrt werden. Mit dem Druckbegrenzungsventil, das der Verbindungsleitung zwischen dem Sperrventil und dem Druckmittelspeicher zugeordnet ist, kann weiterhin der im Druckmittelspeicher anstehende Ladedruck auf einfache Weise abgesichert werden.

Erfindungsgemäß ist weiterhin die Hydraulikpumpe zur Versorgung einer hydraulischen Lenkungsvorrichtung vorgesehen und ist der Förderseite der Hydraulikpumpe ein Prioritätsventil zur bevorzugten Versorgung der Lenkungshydraulik zugeordnet, an das ausgangsseitig die Förderleitung des Arbeitshydrauliksystem angeschlossen ist. Mit der Hydraulikpumpe kann mit einem derartigen Prioritätsventil auf einfache Weise die bevorzugte Versorgung einer Lenkungseinrichtung ermöglicht werden, wobei durch den Anschluss der Verbindungsleitung des Druckmittelspeichers an die von dem Prioritätsventil zum Arbeitshydrauliksystem geführte Förderleitung der Ladevorgang des Druckmittelspeichers keine Einflüsse auf die Priorisierung und die Priorität der Lenkungseinrichtung hat.

Das Laden des Druckmittelspeichers kann bei einer Betätigung eines hydraulischen Verbrauchers des Arbeitshydrauliksystems erfolgen. Um zu erzielen, dass dem betätigten Verbraucher beim gleichzeitigen Laden des Druckmittelspeichers ein ausreichender Volumenstrom zufließt und somit der betätigte Verbraucher mit einer gewünschten Bewegungsgeschwindigkeit betrieben wird, ist gemäß einer vorteilhaften Weiterbildung der Erfindung in der Verbindungsleitung eine Drosseleinrichtung, insbesondere eine Blende oder Drossel, angeordnet. Mit einer derartigen, als Drossel oder Blende ausgebildeten Drosseleinrichtung in der zu dem Druckmittelspeicher geführten Verbindungsleitung kann auf einfache Weise der Ladevolumenstrom in den Druckmittelspeicher begrenzt werden.

Gemäß einer Weiterbildung der Erfindung ist in der zu dem Arbeitshydrauliksystem geführten Förderleitung der Hydraulikpumpe ein die Förderleitung drosselndes Ladeventil zum Laden des Druckmittelspeichers angeordnet und ist die Verbindungsleitung stromauf des Ladeventils an die Förderleitung angeschlossen. Mit einem derartigen Ladeventil kann auch in Betriebszuständen, in denen kein Verbraucher des Arbeitshydrauliksystems betätigt ist, die Förderleitung angedrosselt werden, um ein Laden des Druckmittelspeichers durch den von der Hydraulikpumpe im Pumpenbetrieb geförderten Förderstrom zu ermöglichen.

Besondere Vorteile ergeben sich, wenn das Ladeventil gemäß einer Ausführungsform der Erfindung als Retarderventil ausgebildet ist, das im Bremsbetrieb des Fahrzeugs in eine die Förderleitung drosselnde Drosselstellung betätigt ist. Mit einem derartigen Retarderventil kann durch eine Drosselung der Förderleitung der Hydraulikpumpe in einem Bremsbetrieb des Fahrzeugs über den Verbrennungsmotor und dessen Schleppmoment abgebremst werden. In einem derartigen Bremsbetrieb bei drosselndem Retarderventil kann zudem auf einfache Weise eine Energierückgewinnung erfolgen und der Druckmittelspeicher geladen werden, so dass zum Laden des Druckmittelspeichers die kinetische Energie des Fahrzeugs während eines Bremsvorgangs dient.

Zweckmäßigerweise ist die Verbindung des Druckmittelspeichers mit der Saugseite der Hydraulikpumpe mittels eines elektrisch betätigbaren Steuerventils steuerbar. Mit einem derartigen elektrisch betätigbaren Steuerventil kann auf einfache Weise der Motorbetrieb der Hydraulikpumpe bei einem Startvorgang des abgestellten Verbrennungsmotors gesteuert werden.

Das Steuerventil ist bevorzugt in einer Zweigleitung angeordnet, die von der Verbindungsleitung zwischen dem Sperrventil und dem Druckmittelspeicher zu einer Ansaugleitung der Hydraulikpumpe geführt ist, die von dem Behälter zur Saugseite der Hydraulikpumpe geführt ist.

Sofern in der von dem Behälter zur Saugseite der Hydraulikpumpe geführten Ansaugleitung ein in Richtung zum Behälter sperrendes Sperrventil, insbesondere ein in Richtung zum Behälter sperrendes Rückschlagventil, angeordnet ist, kann auf einfache Weise im Motorbetrieb der Hydraulikpumpe ein Abströmen des Druckmittels aus dem Druckmittelspeicher in den Behälter vermieden werden und im Pumpenbetrieb der Hydraulikpumpe eine Ansaugen von Druckmittel aus dem Behälter erzielt werden.

Sofern gemäß einer Weiterbildung der Erfindung der Verbindungsleitung zwischen dem Sperrventil und dem Druckmittelspeicher ein Drucksensor zugeordnet ist, kann auf einfache Weise in Verbindung mit einer das Ladeventil steuernden elektronischen Steuereinrichtung der Ladevorgang des Druckmittelspeichers sowie die Verbindung mit dem Steuerventil der Entladebetrieb des Druckmittelspeichers gesteuert werden.

Gemäß einer vorteilhaften Weiterbildung der Erfindung ist der Antriebsstrang mit einer von dem Verbrennungsmotor angetriebenen Speisepumpe versehen, die als Pumpe und Motor betreibbar ist, wobei die Speisepumpe im Pumpenbetrieb mit einer Saugseite Druckmittel aus einem Behälter ansaugt und in eine zu einem Speisekreis geführte Speisedruckleitung fördert, und wobei der Speisepumpe im Motorbetrieb an der Saugseite Druckmittel aus dem Druckmittelspeicher zuführbar ist. Mit einer derartigen Speisepumpe, die ebenfalls als Motor mit Druckmittel aus dem Druckmittelspeicher betreibbar, kann bei einem Startvorgang auf einfache Weise das Drehmoment zum Starten des Verbrennungsmotors erhöht werden. Zudem kann mit einer derartigen als Motor betreibbaren Speisepumpe ein Booster-Antrieb erzielt werden und ein zusätzliches Drehmoment in den Antriebsstrang eingeleitet werden, mit dem der laufende Verbrennungsmotor bei einem Beschleunigungsvorgang oder im Fahrbetrieb des Fahrzeugs bei stationärer Fahrt mit einer Zielgeschwindigkeit sowie bei der Betätigung des Arbeitshydrauliksystems unterstützt werden kann. Der von der Speisepumpe gebildete hydrostatische Booster-Antrieb kann zum Downsizing des Verbrennungsmotors genutzt werden.

Gemäß einer vorteilhaften Ausgestaltungsform der Erfindung ist die Verbindung des Druckmittelspeichers mit der Saugseite der Speisepumpe mittels eines weiteren elektrisch betätigbaren Steuerventils steuerbar. Hierdurch wird es auf einfache Weise ermöglicht, den Motorbetrieb der Hydraulikpumpe des Arbeitshydrauliksystems und den Motorbetrieb der Speisepumpe getrennt voneinander mittels jeweils eines Steuerventils zu steuern, so dass auf einfache Weise bei einem Pumpenbetrieb der Hydraulikpumpe des Arbeitshydrauliksystems und somit einer Betätigung des Arbeitshydrauliksystems durch einen Motorbetrieb der Speisepumpe der Verbrennungsmotor mit einem zusätzlichen Drehmoment aus der Speisepumpe unterstützt werden kann.

Zweckmäßigerweise ist hierzu das weitere Steuerventil in einer Zweigleitung angeordnet, die von der Verbindungsleitung zwischen dem Sperrventil und dem Druckmittelspeicher zu einer Ansaugleitung der Speisepumpe geführt ist, die von dem Behälter zur Saugseite der Speisepumpe geführt ist.

Sofern in der von dem Behälter zur Saugseite der Speisepumpe geführten Ansaugleitung ein in Richtung zum Behälter sperrendes Sperrventil, insbesondere ein in Richtung zum Behälter sperrendes Rückschlagventil, angeordnet ist, kann auf einfache Weise im Motorbetrieb der Speisepumpe ein Abströmen des Druckmittels aus dem Druckmittelspeicher in den Behälter vermieden werden und im Pumpenbetrieb der Speisepumpe eine Ansaugen von Druckmittel aus dem Behälter erzielt werden.

Gemäß einer alternativen Ausgestaltungsform der Erfindung weisen die Hydraulikpumpe des Arbeitshydrauliksystems und die Speisepumpe einen gemeinsamen Ansaugkanal auf, der die Saugseite der Hydraulikpumpe und die Saugseite der Speisepumpe mit dem Behälter verbindet und in dem ein in Richtung zum Behälter sperrendes Sperrventil, insbesondere ein in Richtung zum Behälter sperrendes Rückschlagventil, angeordnet ist, wobei der Druckmittelspeicher mittels eines gemeinsamen elektrisch betätigbaren Steuerventils mit dem gemeinsamen Ansaugkanal der Hydraulikpumpe und der Speisepumpe verbindbar ist. Hierdurch wird ein einfacher Aufbau mit lediglich einem einzigen Sperrventil und einem einzigen Steuerventil erzielt und ermöglicht, dass im Motorbetrieb der Hydraulikpumpe des Arbeitshydrauliksystems und der Speisepumpe ein hohes Drehmoment zum Starten des Verbrennungsmotor im Antriebsstrang zur Verfügung steht.

Zweckmäßigerweise ist hierzu das gemeinsame Steuerventil in einer Zweigleitung angeordnet, die von der Verbindungsleitung zwischen dem Sperrventil und dem Druckmittelspeicher zu dem gemeinsamen Ansaugkanal der Hydraulikpumpe und der Speisepumpe geführt ist.

Die als Pumpe und Motor betreibbare Speisepumpe kann hierbei zusätzlich zu der im Motorbetrieb betriebenen Hydraulikpumpe des Arbeitshydrauliksystems als hydraulischer Starter zum Starten des Verbrennungsmotors ausgebildet sein. Alternativ oder zusätzlich kann die als Motor betreibbare Speisepumpe als Booster-Antrieb zur Drehmomentabgabe in den von dem laufenden Verbrennungsmotor angetriebenen Antriebsstrang ausgebildet sein. Hierdurch wird eine Kraftstoffeinsparung des Verbrennungsmotors erzielt und der Booster-Antrieb durch den Motorbetrieb der Speisepumpe ermöglicht ein Downsizing des Verbrennungsmotors.

Die Hydraulikpumpe des Arbeitshydrauliksystems kann als Konstantpumpe mit einem festen Verdrängervolumen oder als Verstellpumpe mit einem verstellbaren Verdrängervolumen ausgebildet sein.

Die Hydraulikpumpe des Arbeitshydrauliksystems ist zweckmäßigerweise als Axialkolbenmaschine, bevorzugt als Axialkolbenmaschine in Schrägscheibenbauweise, oder als Radialkolbenmaschine oder als Zahnradmaschine ausgebildet.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Antriebsstrangs in einer schematischen Darstellung,
- Figur 2: eine zweite Ausführungsform eines erfindungsgemäßen Antriebsstrangs in einer schematischen Darstellung und
- Figur 3: eine Weiterbildung der Figur 2.

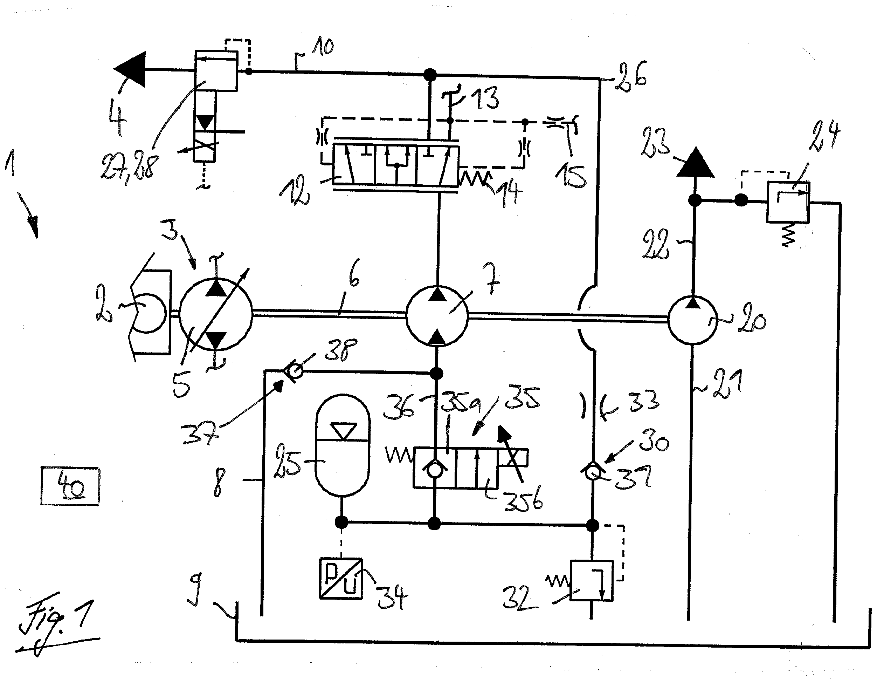

In der Figur 1 ist ein erfindungsgemäßer Antriebsstrang 1 einer nicht näher dargestellten mobilen Arbeitsmaschine, beispielsweise eines Flurförderzeugs oder einer Bau- bzw. Landmaschine, in einer Prinzipdarstellung dargestellt.

Der erfindungsgemäße Antriebsstrang 1 besteht aus einem Verbrennungsmotor 2, beispielsweise einem Dieselmotor, einem von dem Verbrennungsmotor 2 angetriebenen Fahrantrieb 3 des Fahrzeugs sowie einem von dem Verbrennungsmotor 2 angetriebenen Arbeitshydrauliksystem 4.

Der Fahrantrieb 3 ist im dargestellten Ausführungsbeispiel als hydrostatischer Fahrantrieb ausgebildet, der aus einer im Fördervolumen verstellbaren Fahrpumpe 5 besteht, die zum Antrieb mit einer Abtriebswelle 6 des Verbrennungsmotors 2 in trieblicher Verbindung steht. Die Fahrpumpe 5 steht mit einem oder mehreren im Schluckvolumen festen oder verstellbaren, nicht näher dargestellten Hydromotoren im geschlossenen Kreislauf in Verbindung, die auf nicht mehr dargestellte Weise mit den angetriebenen Rädern der Arbeitsmaschine in Wirkverbindung stehen.

Der Fahrantrieb 3 kann alternativ als elektrischer Fahrantrieb mit einem von dem Verbrennungsmotor 2 angetriebenen elektrischen Generator und einem oder mehreren elektrischen Fahrmotoren gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe, vorgesehen werden.

Das Arbeitshydrauliksystem 4 umfasst Arbeitsfunktionen der Arbeitsmaschine, beispielsweise bei einem Flurförderzeug eine Arbeitshydraulik zum Betätigen eines Lastaufnahmemittels an einem Hubmast, bzw. bei einer beispielsweise als Bagger ausgebildeten Baumaschine die Arbeitsfunktionen der von einer Schaufel ausgebildeten Arbeitsausrüstung.

Das Arbeitshydrauliksystem 4 umfasst im dargestellten Ausführungsbeispiel mindestens eine im offenen Kreislauf betriebene Hydraulikpumpe 7, die zum Antrieb mit der Abtriebswelle 6 des Verbrennungsmotors 2 in trieblicher Verbindung steht. Die Hydraulikpumpe 7 des Arbeitshydrauliksystems 4 ist in dem Ausführungsbeispiel der Figur 1 als im Konstantpumpe mit einem konstanten Verdrängervolumen ausgebildet.

Die Hydraulikpumpe 7 steht eingangsseitig mit der Saugseite mittels einer Ansaugleitung 8 mit einem Behälter 9 in Verbindung. Eine ausgangsseitig mit der Förderseite der Hydraulikpumpe 7 in Verbindung stehende Förderleitung 10 ist an eine nicht näher dargestellte Steuerventileinrichtung angeschlossen, mittels der die nicht näher dargestellten hydraulischen Verbraucher des Arbeitshydrauliksystems 4 steuerbar sind. Die Steuerventileinrichtung umfasst bevorzugt ein oder mehrere Wegeventile zur Betätigung der Verbraucher. Im dargestellten Ausführungsbeispiel ist weiterhin ein Prioritätsventil 12 dargestellt, mit dem die bevorzugte Versorgung eines von der Hydraulikpumpe 7 versorgten Verbrauchers, beispielsweise einer hydraulischen Lenkungseinrichtung, sichergestellt werden kann. Das Prioritätsventil 12 ist eingangsseitig mit der Förderseite der Hydraulikpumpe 7 verbunden und steht ausgangsseitig mit der zu dem Arbeitshydrauliksystem 4 geführten Förderleitung 10 sowie einer zu der Lenkungseinrichtung geführten Förderleitung 13 in Verbindung. Das Prioritätsventil 12 ist von einer Feder 14 sowie dem in einer Lastdruckleitung 15 anstehenden Lastdruck der Lenkungseinrichtung gesteuert.

Der Antriebsstrang 1 umfasst weiterhin eine Speisepumpe 20, die zum Antrieb mit der Abtriebswelle 6 in Verbindung steht. Die Speisepumpe 20 ist als Konstantpumpe mit einem konstanten Verdrängervolumen ausgebildet, die im offenen Kreislauf betrieben ist. Die Speisepumpe 20 steht hierzu mit der Saugseite über eine Ansaugleitung 21 mit dem Behälter 9 in Verbindung und fördert in eine an die Förderseite angeschlossene Speisedruckleitung 22, an die die entsprechenden Verbraucher eines Speisekreises 23 angeschlossen sind, beispielsweise eine Verstelleinrichtung zur Verstellung des Verdrängervolumens der Fahrpumpe 5, eine Einspeisevorrichtung des hydrostatischen Fahrantriebs, eine Bremsanlage des Fahrzeugs und Vorsteuerventile für die Steuerventile des Arbeitshydrauliksystems 4. Zur Absicherung des Speisedruckes in dem Speisedruckkreis 23 ist der Speisedruckleitung 22 eine Druckbegrenzungseinrichtung 24, beispielsweise ein Druckbegrenzungsventil, zugeordnet.

Bei dem erfindungsgemäßen Antriebsstrang 1 ist die Hydraulikpumpe 7 des Arbeitshydrauliksystems 4 als Zweiquadrantentriebwerk ausgebildet, das bei gleicher Drehrichtung und gleicher Durchflussrichtung des Druckmittels als Pumpe und Motor betreibbar ist.

Im Pumpenbetrieb saugt die Hydraulikpumpe 7 über die Ansaugleitung 8 Druckmittel aus dem Behälter 9 an und fördert das Druckmittel über das Prioritätsventil 12 in die Förderleitung 10 des Arbeitshydrauliksystems 4 bzw. die Förderleitung 13 der Lenkungseinrichtung. Im Motorbetrieb der Hydraulikpumpe 7, in der die Hydraulikpumpe 7 als hydraulischer Starter einer Start-Stopp-Funktion zum Starten des Verbrennungsmotors 2 ausgebildet ist, wird die Hydraulikpumpe 7 an der Saugseite mit Druckmittel aus einem Druckmittelspeicher 25 angetrieben.

Der Druckmittelspeicher 25 ist zum Laden mit Druckmittel an die zu dem Arbeitshydrauliksystem 4 geführte Förderleitung 10 der Hydraulikpumpe 7 mittels einer Verbindungsleitung 26 angeschlossen.

In der Förderleitung 10 ist ein elektrisch betätigbares Ladeventil 27 angeordnet, das bei einer Ansteuerung in eine die Förderleitung 10 drosselnde Drosselstellung zum Aufstauen eines Druckes betätigbar ist. Das Ladeventil 27 ist bevorzugt als Retarderventil 28 ausgeführt, das im Bremsbetrieb des Fahrzeugs in eine Drosselstellung betätigt wird, um durch Aufstauen eines Druckes in der Förderleitung 10 und über das Schleppmoment des Verbrennungsmotors 2 das Fahrzeug abzubremsen. Die Verbindungsleitung 26 ist hierbei stromauf des Ladeventils 27 und somit zwischen dem Ladeventil 27 und dem Prioritätsventil 12 an die Förderleitung 10 angeschlossen.

In der Verbindungsleitung 26 ist erfindungsgemäß ein selbsttätig und druckabhängig in Richtung zum Druckmittelspeicher 25 öffnendes Sperrventil 30 angeordnet, das bevorzugt als in Richtung zum Druckmittelspeicher 25 öffnendes Rückschlagventil 31 ausgebildet ist. Weiterhin ist der Verbindungsleitung 26 zwischen dem Sperrventil 30 und dem Druckmittelspeicher 25 ein Druckbegrenzungsventil 32 zur Absicherung des Druckes in dem Druckmittelspeicher 25 zugeordnet. In der Verbindungsleitung 26 ist weiterhin zur Begrenzung des Ladevolumenstroms des Druckmittelspeichers 25 eine Drosseleinrichtung 33 angeordnet, die als Blende oder Drossel ausgeführt sein kann. Die Drosseleinrichtung 33 kann hierbei - wie dargestellt - stromauf des Sperrventils 30 oder alternativ stromab des Sperrventils 30 angeordnet sein.

Der Verbindungsleitung 26 zwischen dem Sperrventil 30 und dem Druckmittelspeicher 25 ist weiterhin ein Drucksensor 34 zugeordnet. Der Drucksensor 34 dient zur Überwachung des Ladedruckes und somit des Ladezustands des Druckmittelspeichers 25.

Die Verbindung des Druckmittelspeichers 25 mit der Saugseite der Hydraulikpumpe 7 für den Motorbetrieb der Hydraulikpumpe 7 ist mittels eines elektrisch betätigbaren Steuerventils 35 steuerbar. Das Steuerventil 35 weist eine Sperrstellung 35a und eine Durchflussstellung 35b auf, wobei die Sperrstellung 35a bevorzugt leckagedicht ausgeführt ist mit einem in Richtung zur Hydraulikpumpe 7 sperrenden Sperrventil.

Das Steuerventil 35 ist in einer Zweigleitung 36 angeordnet, die von der Verbindungsleitung 26 zwischen dem Sperrventil 30 und dem Druckmittelspeicher 25 zu der zur Saugseite der Hydraulikpumpe 7 geführten Ansaugleitung 8 geführt ist.

In der Ansaugleitung 8 der Hydraulikpumpe 7 ist ein in Richtung zum Behälter 9 sperrendes Sperrventil 37 angeordnet, das bevorzugt als ein in Richtung zum Behälter sperrendes Rückschlagventil 38 ausgebildet ist.

Eine elektronische Steuereinrichtung 40 steht eingangsseitig mit dem Drucksensor 34 in Verbindung und dient zur Ansteuerung des Ladeventils 27 sowie des Steuerventils 35.

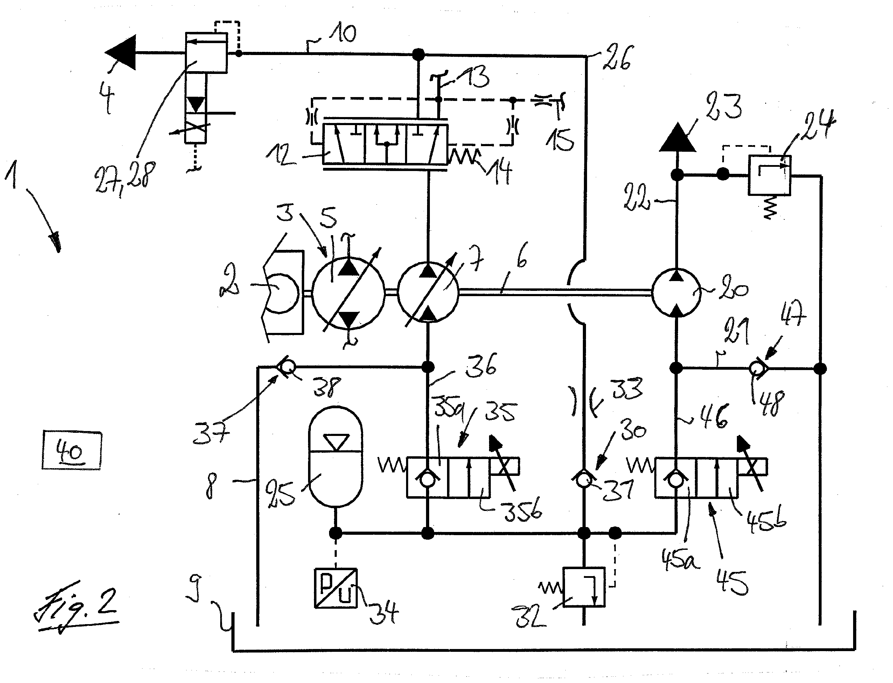

In der Figur 2 ist eine zweite Ausführungsform der Erfindung dargestellt, bei der die als Pumpe und Motor betreibbare Hydraulikpumpe 7 zur Versorgung des Arbeitshydrauliksystems 4 und der Lenkungseinrichtung als Verstellpumpe mit einem einstellbaren Verdrängungsvolumen ausgebildet ist, beispielsweise als Axialkolbenmaschine in Schrägscheibenbauweise.

Weiterhin ist die Speisepumpe 20 der Figur 2 als Zweiquadrantentriebwerk ausgebildet, das bei gleicher Drehrichtung und gleicher Durchflussrichtung des Druckmittels als Pumpe und Motor betreibbar ist.

Im Pumpenbetrieb saugt die Speisepumpe 20 mit der an die Saugseite angeschlossenen Ansaugleitung 21 Druckmittel aus dem Behälter 9 an und fördert in die Speisedruckleitung 22, die mit der Förderseite der Speisepumpe verbunden ist. Im Motorbetrieb der Speisepumpe 20, in der die Speisepumpe 20 zusätzlich zu der Hydraulikpumpe 7 als hydraulischer Starter einer Start-Stopp-Funktion zum Starten des Verbrennungsmotors 2 und/oder als Booster-Antrieb zur Unterstützung des laufenden Verbrennungsmotors 2 ausgebildet ist, wird die Speisepumpe 7 an der Saugseite mit Druckmittel aus dem Druckmittelspeicher 25 angetrieben.

Zur Steuerung der Verbindung des Druckmittelspeichers 25 mit der Saugseite der Speisepumpe 20 für den Motorbetrieb der Speisepumpe 20 ist ein weiteres elektrisch betätigbares Steuerventil 45 vorgesehen. Das Steuerventil 45 weist eine Sperrstellung 45a und eine Durchflussstellung 45b auf, wobei die Sperrstellung 45a bevorzugt leckagedicht ausgeführt ist mit einem in Richtung zur Speisepumpe 20 sperrenden Sperrventil.

Das weitere Steuerventil 45 ist in einer Zweigleitung 46 angeordnet ist, die von der Verbindungsleitung 26 zwischen dem Sperrventil 30 und dem Druckmittelspeicher 25 zu der Ansaugleitung 21 der Speisepumpe 20 geführt ist. Das weitere Steuerventil 45 ist ebenfalls von der elektronischen Steuereinrichtung 40 betätigbar.

In der von dem Behälter 9 zur Saugseite der Speisepumpe 20 geführten Ansaugleitung 21 ist weiterhin ein in Richtung zum Behälter 9 sperrendes Sperrventil 47 angeordnet, das bevorzugt als ein in Richtung zum Behälter 9 sperrendes Rückschlagventil 48 ausgebildet ist.

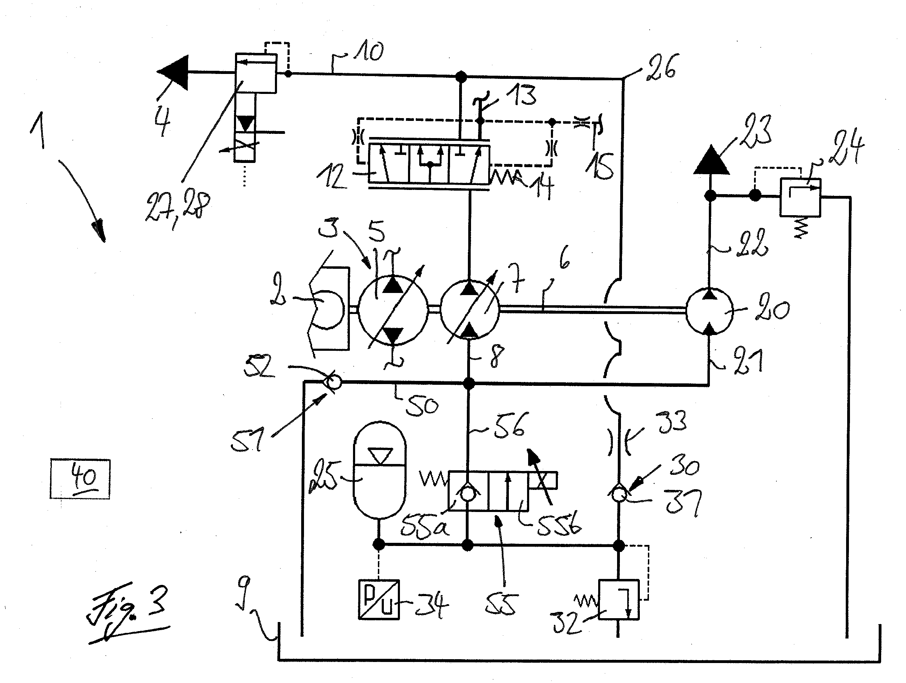

In der Figur 3 ist eine Weiterbildung eines Antriebsstranges 1 dargestellt, in dem die Hydraulikpumpe 7 und die Speisepumpe 20 jeweils als Zweiquadrantentriebwerke ausgebildet sind, die als Pumpe und Motor betreibbar sind.

Die Hydraulikpumpe 7 des Arbeitshydrauliksystems 4 und die Speisepumpe 20 weisen einen gemeinsamen Ansaugkanal 50 auf, der die Saugseite und somit die Ansaugleitung 8 der Hydraulikpumpe 7 und die Saugseite und somit die Ansaugleitung 21 der Speisepumpe 20 mit dem Behälter 9 verbindet. In dem gemeinsamen Ansaugkanal 50 ist ein in Richtung zum Behälter sperrendes Sperrventil 51 angeordnet, das bevorzugt als ein in Richtung zum Behälter sperrendes Rückschlagventil 52 ausgebildet ist.

Zur Steuerung der Verbindung der Saugseiten der Hydraulikpumpe 7 und der Speisepumpe 20 für den Motorbetrieb der beiden Triebwerke ist ein gemeinsames elektrisch betätigbares Steuerventil 55 vorgesehen. Das Steuerventil 55 weist eine Sperrstellung 55a und eine Durchflussstellung 55b auf, wobei die Sperrstellung 55a bevorzugt leckagedicht ausgeführt ist mit einem in Richtung zum Ansaugkanal 50 sperrenden Sperrventil. Das Steuerventil 55 ist von der elektronischen Steuereinrichtung 40 betätigbar.

Das gemeinsame Steuerventil 55 ist in einer Zweigleitung 56 angeordnet, die von der Verbindungsleitung 26 zwischen dem Sperrventil 30 und dem Druckmittelspeicher 25 zu dem gemeinsamen Ansaugkanal 50 der Hydraulikpumpe 7 und der Speisepumpe 20 geführt ist.

Die Steuerventile 35, 45, 55 der Figuren 1 bis 3 können als Schaltventile oder als in Zwischenstellungen drosselnde Proportionalventile ausgebildet sein.

Bei dem erfindungsgemäßen Antriebsstrang 1 der Figuren 1 bis 3 kann der Druckmittelspeicher 25 über die Drosseleinrichtung 33 und das Sperrventil 30 auf einfache Weise bei einer Betätigung eines Verbrauchers des Arbeitshydrauliksystems 4 mit Druckmittel aufgeladen werden, sofern der Lastdruck des Verbrauchers den Ladedruck des Druckmittelspeichers 25 übersteigt. Zudem kann durch entsprechende Ansteuerung des Ladeventils 27 in eine Drosselstellung der Druckmittelspeicher 25 über die Drosseleinrichtung 33 und das Sperrventil 30 auf einfache Weise in Betriebszuständen aufgeladen werden, in dem der Verbrennungsmotor 2 Leistungsreserven aufweist. Besondere Vorteile ergeben sich, wenn das Ladeventil 27 als Retarderventil 28 ausgeführt ist und im Bremsbetrieb des Fahrzeugs in eine Drosselstellung betätigt wird, da zum Laden des Druckmittelspeichers 25 die kinetische Energie des abbremsenden Fahrzeugs verwendet wird und somit eine Energierückgewinnung erfolgen kann. Beim Abbremsen des Fahrzeugs über den hydrostatischen Fahrantrieb 3 arbeitet die Fahrpumpe 5 als Motor, der die Hydraulikpumpe 7 des Arbeitshydrauliksystems 4 antreibt, so dass über das in Richtung der Drosselstellung angesteuerte Retarderventil 28 der Druckmittelspeicher 25 mit Druckmittel aufgeladen werden kann.

Die Hydraulikpumpe 7 fördert somit bei angesteuerten Verbrauchern des Arbeitshydrauliksystems 4 einen Förderstrom zur Betätigung der Verbraucher des Arbeitshydrauliksystems 4 und dient weiterhin zur Lieferung eines Förderstroms zum Laden des Druckmittelspeichers 25. Zum Laden des Druckmittelspeichers 25 kann die Hydraulikpumpe 7 primärseitig durch die von dem Verbrennungsmotor 2 gelieferte Leistung angetrieben werden. In Verbindung mit dem Retarderventil 28 wird die Hydraulikpumpe 7 zum Laden des Druckmittelspeichers 25 mit der beim Verzögern des Fahrzeugs in einem Bremsbetrieb aufgenommenen kinetischen Energie des Fahrzeugs angetrieben.

Die Hydraulikpumpe 7 des Arbeitshydrauliksystems 4 dient im Motorbetrieb als hydraulischer Starter für den abgestellten Verbrennungsmotor 2, um eine Start-Stopp-Funktion zu erzielen. Hierzu wird bei der Figur 1 bei ausreichendem Druck im Druckmittelspeicher 25 das Steuerventil 35 in die Durchflussstellung 35b betätigt. Das Sperrventil 37 in der Ansaugleitung 8 verhindert ein Abströmen des Druckmittels aus dem Druckmittelspeicher 25 in den Behälter 9. Sobald die Startdrehzahl des Verbrennungsmotors 2 überschritten ist, wozu ein nicht näher dargestellter mit der Steuereinrichtung 40 in Verbindung stehender Drehzahlsensor vorgesehen ist, der dem Verbrennungsmotor 2 bzw. der Abtriebswelle 6 zugeordnet ist, wird das Steuerventil 35 in die Sperrstellung 35a betätigt, um ein weiteres Entleeren des Druckmittelspeichers 25 zu vermeiden.

In der Figur 3 kann durch den zusätzlichen Motorbetrieb der Speisepumpe 20 in der Durchflussstellung 55b des Steuerventils 55, wobei die Hydraulikpumpe 7 und die Speisepumpe 20 gemeinsam einen hydraulischen Starter für den abgestellten Verbrennungsmotor 2 bilden, um eine Start-Stopp-Funktion zu erzielen, das Drehmoment zum Starten des Verbrennungsmotors 2 auf einfache Weise erhöht werden.

Bei der Figur 2 kann zum Starten des abgestellten Verbrennungsmotors 2 in einem Motorbetrieb der Hydraulikpumpe 7 durch zusätzliches Betätigen des weiteren Steuerventils 45 in die Durchflussstellung 45b das Drehmoment zum Starten des Verbrennungsmotors 2 durch einen zusätzlichen Motorbetrieb der Speisepumpe 20 erhöht werden. Zudem ist bei der Figur 2 durch die beiden Steuerventile 35, 45 möglich, die Speisepumpe 20 durch alleiniges Betätigen des Steuerventils 45 in die Durchflussstellung 45b allein im Motorbetrieb zu betreiben, um einen Booster-Antrieb durch einen Motorbetrieb der Speisepumpe 20 zu ermöglichen, in dem die Speisepumpe 20 zu dem laufenden Verbrennungsmotor 2 ein zusätzliches, den Verbrennungsmotor 2 unterstützendes Drehmoment in den Antriebsstrang 1 einleitet. Durch den Motorbetrieb der Speisepumpe 20 kann das Beschleunigen des Fahrzeugs durch den Booster-Antrieb und das zusätzliche Drehmoment der Speisepumpe 20 unterstützt werden, indem der Druckmittelspeicher 25 über das Steuerventil 45 zu Beginn des Beschleunigungsvorgangs des Fahrzeugs mit der Speisepumpe 20 verbunden wird. Die Dauer des Boost-Vorgangs kann in Abhängigkeit von dem Ladezustand des Druckmittelspeichers 25 begrenzt werden, der über den Drucksensor 34 erfasst wird. Sofern zum Ende des Beschleunigungsvorgangs des Fahrzeugs in dem Druckmittelspeicher 25 noch ausreichend Druckmittel vorhanden ist, kann auch bei einer stationären Fahrt des Fahrzeugs mit der Zielgeschwindigkeit der Motorbetrieb des Speisepumpe 20 aufrechterhalten werden, um das Moment aus dem Booster-Antrieb der Speisepumpe 20 zu nutzen. Auf dieselbe Weise kann durch den alleinigen Motorbetrieb der Speisepumpe 20 durch das Steuerventil 45 der Verbrennungsmotor 2 bei der Betätigung eines oder mehrere Verbraucher des Arbeitshydrauliksystems 4, wobei die Hydraulikpumpe 7 als Pumpe arbeitet, mit einem Zusatzdrehmoment aus dem Booster-Antrieb der Speisepumpe 20 unterstützt werden.

## Patentansprüche

1. Fahrzeug, insbesondere mobile Arbeitsmaschine, mit einem Antriebsstrang (1), der aus einem Verbrennungsmotor (2) und einem von dem Verbrennungsmotor (2) angetriebenen Fahrantrieb (3) sowie einem von dem Verbrennungsmotor (2) angetriebenen Arbeitshydrauliksystem (4) besteht, wobei das Arbeitshydrauliksystem (4) mindestens eine von dem Verbrennungsmotor (2) angetriebene Hydraulikpumpe (7) aufweist, die als Pumpe und Motor betreibbar ist, wobei die Hydraulikpumpe (7) im Pumpenbetrieb mit einer Saugseite Druckmittel aus einem Behälter (9) ansaugt und in eine zu dem Arbeitshydrauliksystem (4) geführte Förderleitung (10) fördert und wobei der Hydraulikpumpe (7) im Motorbetrieb, in der die Hydraulikpumpe (7) als hydraulischer Starter einer Start-Stopp-Funktion zum Starten des Verbrennungsmotors (2) ausgebildet ist, an der Saugseite Druckmittel aus einem Druckmittelspeicher (25) zuführbar ist, wobei an die zu dem Arbeitshydrauliksystem (4) geführte Förderleitung (10) der Hydraulikpumpe (7) eine zu dem Druckmittelspeicher (25) geführte Verbindungsleitung (26) angeschlossen ist, wobei in der Verbindungsleitung (26) ein selbsttätig und druckabhängig in Richtung zum Druckmittelspeicher (26) öffnendes Sperrventil (30), insbesondere ein in Richtung zum Druckmittelspeicher (25) öffnendes Rückschlagventil (31), angeordnet ist und der Verbindungsleitung (26) zwischen dem Sperrventil (30) und dem Druckmittelspeicher (25) ein Druckbegrenzungsventil (32) zugeordnet ist, das den im Druckmittelspeicher (25) anstehenden Ladedruck absichert, **dadurch gekennzeichnet, dass** die Hydraulikpumpe (7) zur Versorgung einer hydraulischen Lenkungsvorrichtung vorgesehen ist und der Förderseite der Hydraulikpumpe (7) ein Prioritätsventil (12) zur bevorzugten Versorgung der Lenkungshydraulik zugeordnet ist, an das ausgangsseitig die Förderleitung (10) des Arbeitshydrauliksystem (4) angeschlossen ist.

2. Fahrzeug nach Anspruch 1, **dadurch gekennzeichnet, dass** in der Verbindungsleitung (26) eine Drosseleinrichtung (33), insbesondere eine Blende oder Drossel, angeordnet ist.

3. Fahrzeug nach Anspruch 1 oder 2, **dadurch gekennzeichnet, dass** in der zu dem Arbeitshydrauliksystem (4) geführten Förderleitung (10) der Hydraulikpumpe (7) ein die Förderleitung (10) drosselndes Ladeventil (27) zum Laden des Druckmittelspeichers (25) angeordnet ist und die Verbindungsleitung (26) stromauf des Ladeventils (27) an die Förderleitung (10) angeschlossen ist.

4. Fahrzeug nach Anspruch 3, **dadurch gekennzeichnet, dass** das Ladeventil (27) als Retarderventil (28) ausgebildet ist, das im Bremsbetrieb des Fahrzeugs in eine die Förderleitung (10) drosselnde Drosselstellung betätigt ist.

5. Fahrzeug nach einem der Ansprüche 1 bis 4, **dadurch gekennzeichnet, dass** die Verbindung des Druckmittelspeichers (25) mit der Saugseite der Hydraulikpumpe (7) mittels eines elektrisch betätigbaren Steuerventils (35) steuerbar ist.

6. Fahrzeug nach Anspruch 5, **dadurch gekennzeichnet, dass** das Steuerventil (35) in einer Zweigleitung (36) angeordnet ist, die von der Verbindungsleitung (26) zwischen dem Sperrventil (30) und dem Druckmittelspeicher (25) zu einer Ansaugleitung (8) der Hydraulikpumpe (7) geführt ist, die von dem Behälter (9) zur Saugseite der Hydraulikpumpe (7) geführt ist.

7. Fahrzeug nach Anspruch 6, **dadurch gekennzeichnet, dass** in der von dem Behälter (9) zur Saugseite der Hydraulikpumpe (7) geführten Ansaugleitung (8) ein in Richtung zum Behälter (9) sperrendes Sperrventil (37), insbesondere ein in Richtung zum Behälter sperrendes Rückschlagventil (38), angeordnet ist.

8. Fahrzeug nach einem der Ansprüche 1 bis 7, **dadurch gekennzeichnet, dass** der Verbindungsleitung (26) zwischen dem Sperrventil (30) und dem Druckmittelspeicher (25) ein Drucksensor (34) zugeordnet ist.

9. Fahrzeug nach einem der Ansprüche 1 bis 8, **dadurch gekennzeichnet, dass** eine von dem Verbrennungsmotor (2) angetriebene Speisepumpe (20) vorgesehen ist, die als Pumpe und Motor betreibbar ist, wobei die Speisepumpe (20) im Pumpenbetrieb mit einer Saugseite Druckmittel aus einem Behälter (9) ansaugt und in eine zu einem Speisekreis (23) geführte Speisedruckleitung (22) fördert, und wobei der Speisepumpe (20) im Motorbetrieb an der Saugseite Druckmittel aus dem Druckmittelspeicher (25) zuführbar ist.

10. Fahrzeug nach Anspruch 9, **dadurch gekennzeichnet, dass** die Verbindung des Druckmittelspeichers (25) mit der Saugseite der Speisepumpe (20) mittels eines weiteren elektrisch betätigbaren Steuerventils (45) steuerbar ist.

11. Fahrzeug nach Anspruch 10, **dadurch gekennzeichnet, dass** das weitere Steuerventil (45) in einer Zweigleitung (46) angeordnet ist, die von der Verbindungsleitung (26) zwischen dem Sperrventil (30) und dem Druckmittelspeicher (25) zu einer Ansaugleitung (21) der Speisepumpe (20) geführt ist, die von dem Behälter (9) zur Saugseite der Speisepumpe (20) geführt ist.

12. Fahrzeug nach Anspruch 11, **dadurch gekennzeichnet, dass** in der von dem Behälter (9) zur Saugseite der Speisepumpe (20) geführten Ansaugleitung (21) ein in Richtung zum Behälter sperrendes Sperrventil (47), insbesondere ein in Richtung zum Behälter (9) sperrendes Rückschlagventil (48), angeordnet ist.

13. Fahrzeug nach Anspruch 9, **dadurch gekennzeichnet, dass** die Hydraulikpumpe (7) des Arbeitshydrauliksystems (4) und die Speisepumpe (20) einen gemeinsamen Ansaugkanal (50) aufweisen, der die Saugseite der Hydraulikpumpe (7) und die Saugseite der Speisepumpe (20) mit dem Behälter (9) verbindet und in dem ein in Richtung zum Behälter (9) sperrendes Sperrventil (51), insbesondere ein in Richtung zum Behälter (9) sperrendes Rückschlagventil (52), angeordnet ist, wobei der Druckmittelspeicher (25) mittels eines gemeinsamen elektrisch betätigbaren Steuerventils (55) mit dem gemeinsamen Ansaugkanal (50) der Hydraulikpumpe (7) und der Speisepumpe (20) verbindbar ist.

14. Fahrzeug nach Anspruch 13,
**dadurch gekennzeichnet, dass** das gemeinsame Steuerventil (55) in einer Zweigleitung (56) angeordnet ist, die von der Verbindungsleitung (26) zwischen dem Sperrventil (30) und dem Druckmittelspeicher (25) zu dem gemeinsamen Ansaugkanal (50) der Hydraulikpumpe (7) und der Speisepumpe (20) geführt ist.

15. Fahrzeug nach einem der Ansprüche 9 bis 14, **dadurch gekennzeichnet, dass** die Speisepumpe (20) als hydraulischer Starter zum Starten des Verbrennungsmotors (2) und/oder als Booster-Antrieb zur Drehmomentabgabe in den von dem laufenden Verbrennungsmotor (2) angetriebenen Antriebsstrang (1) ausgebildet ist.

16. Fahrzeug nach einem der Ansprüche 1 bis 15, **dadurch gekennzeichnet, dass** die Hydraulikpumpe (7) des Arbeitshydrauliksystems (4) als Konstantpumpe mit einem festen Verdrängervolumen oder als Verstellpumpe mit einem verstellbaren Verdrängervolumen ausgebildet ist.

17. Fahrzeug nach einem der Ansprüche 1 bis 16, **dadurch gekennzeichnet, dass** die Hydraulikpumpe (7) als Axialkolbenmaschine oder als Radialkolbenmaschine oder als Zahnradmaschine ausgebildet ist.

## Claims

1. Vehicle, in particular mobile work machine, having a drivetrain (1) that is composed of an internal combustion engine (2) and of a traction drive (3) driven by the internal combustion engine (2) and of a working hydraulics system (4) driven by the internal combustion engine (2), wherein the working hydraulics system (4) has at least one hydraulic pump (7) which is driven by the internal combustion engine (2) and which is operable as a pump and as a motor, wherein, during pump operation, the hydraulic pump (7) draws pressure medium by way of a suction side out of a vessel (9) and conveys said pressure medium into a conveying line (10) that leads to the working hydraulics system (4), and wherein, during motor operation, in which the hydraulic pump (7) is configured as a hydraulic starter of a start-stop function for starting the internal combustion engine (2), pressure medium can be fed to the hydraulic pump (7) at the suction side from a pressure medium accumulator (25), wherein a connecting line (26) that leads to the pressure medium accumulator (25) is connected to the conveying line (10), which leads to the working hydraulics system (4), of the hydraulic pump (7), wherein a shut-off valve (30) that opens automatically and in pressure-dependent fashion in the direction of the pressure medium accumulator (26), in particular a check valve (31) that opens in the direction of the pressure medium accumulator (25), is arranged in the connecting line (26), and the connecting line (26) is assigned, between the shut-off valve (30) and the pressure medium accumulator (25), a pressure-limiting valve (32) that acts as a safeguard for the charge pressure prevailing in the pressure medium accumulator (25), **characterized in that** the hydraulic pump (7) is provided for providing a supply to a hydraulic steering device, and the conveying side of the hydraulic pump (7) is assigned a priority valve (12) for preferentially providing a supply to the steering hydraulics, to the outlet side of which priority valve (12) the conveying line (10) of the working hydraulics system (4) is connected.

2. Vehicle according to Claim 1, **characterized in that** a throttle device (33), in particular an orifice or throttle, is arranged in the connecting line (26).

3. Vehicle according to Claim 1 or 2, **characterized in that**, in the conveying line (10), which leads to the working hydraulics system (4) of the hydraulic pump (7), there is arranged a charging valve (27) which throttles the conveying line (10) and which serves for the charging of the pressure medium accumulator (25), and the connecting line (26) is connected to the conveying line (10) upstream of the charging valve (27).

4. Vehicle according to Claim 3, **characterized in that** the charging valve (27) is configured as a retarder valve (28) which, during braking operation of the vehicle, is actuated into a throttling position in which it throttles the conveying line (10).

5. Vehicle according to any one of Claims 1 to 4, **characterized in that** the connection of the pressure medium accumulator (25) to the suction side of the hydraulic pump (7) is controllable by means of an electrically actuatable control valve (35).

6. Vehicle according to Claim 5, **characterized in that** the control valve (35) is arranged in a branch line (36) which leads from the connecting line (26) between the shut-off valve (30) and the pressure medium accumulator (25) to an intake line (8) of the hydraulic pump (7), which intake line (8) leads from the vessel (9) to the suction side of the hydraulic pump (7).

7. Vehicle according to Claim 6, **characterized in that**, in the intake line (8) that leads from the vessel (9) to the suction side of the hydraulic pump (7), there is arranged a shut-off valve (37) that blocks in the direction of the vessel (9), in particular a check valve (38) that blocks in the direction of the vessel.

8. Vehicle according to any one of Claims 1 to 7, **characterized in that** the connecting line (26) is assigned, between the shut-off valve (30) and the pressure medium accumulator (25), a pressure sensor (34) .

9. Vehicle according to any one of Claims 1 to 8, **characterized in that** a feed pump (20) is provided which is driven by the internal combustion engine (2) and which is operable as a pump and as a motor, wherein, during pump operation, the feed pump (20) draws pressure medium by way of a suction side out of a vessel (9) and conveys said pressure medium into a feed pressure line (22) that leads to a feed circuit (23), and wherein, during motor operation, pressure medium can be fed to the feed pump (20) at the suction side from the pressure medium accumulator (25).

10. Vehicle according to Claim 9, **characterized in that** the connection of the pressure medium accumulator (25) to the suction side of the feed pump (20) is controllable by means of a further electrically actuatable control valve (45).

11. Vehicle according to Claim 10, **characterized in that** the further control valve (45) is arranged in a branch line (46) that leads from the connecting line (26) between the shut-off valve (30) and the pressure medium accumulator (25) to an intake line (21) of the feed pump (20) that leads from the vessel (9) to the suction side of the feed pump (20).

12. Vehicle according to Claim 11, **characterized in that**, in the intake line (21) that leads from the vessel (9) to the suction side of the feed pump (20), there is arranged a shut-off valve (47) that blocks in the direction of the vessel, in particular a check valve (48) that blocks in the direction of the vessel (9).

13. Vehicle according to Claim 9, **characterized in that** the hydraulic pump (7) of the working hydraulics system (4) and the feed pump (20) have a common intake channel (50) which connects the suction side of the hydraulic pump (7) and the suction side of the feed pump (20) to the vessel (9) and in which there is arranged a check valve (51) which blocks in the direction of the vessel (9), in particular a check valve (52) which blocks in the direction of the vessel (9), wherein the pressure medium accumulator (25) is connectable by means of a common electrically actuatable control valve (55) to the common intake channel (50) of the hydraulic pump (7) and to the feed pump (20).

14. Vehicle according to Claim 13, **characterized in that** the common control valve (55) is arranged in a branch line (56) that leads from the connecting line (26) between the shut-off valve (30) and the pressure medium accumulator (25) to the common intake channel (50) of the hydraulic pump (7) and the feed pump (20).

15. Vehicle according to any one of Claims 9 to 14, **characterized in that** the feed pump (20) is configured as a hydraulic starter for starting the internal combustion engine (2) and/or as a booster drive for outputting torque into the drivetrain (1) that is driven by the running internal combustion engine (2).

16. Vehicle according to any one of Claims 1 to 15, **characterized in that** the hydraulic pump (7) of the working hydraulics system (4) is configured as a constant-displacement pump with a fixed displacement volume or as a variable-displacement pump with an adjustable displacement volume.

17. Vehicle according to any one of Claims 1 to 16, **characterized in that** the hydraulic pump (7) is configured as an axial piston machine or as a radial piston machine or as a gearwheel-type machine.

## Revendications

1. Véhicule, en particulier machine de travail mobile, comportant une chaîne cinématique (1) qui est constituée d'un moteur à combustion interne (2) et d'un système d'entraînement (3) entraîné par le moteur à combustion interne (2) ainsi que d'un système hydraulique de travail (4) entraîné par le moteur à combustion interne (2), le système hydraulique de travail (4) comprenant au moins une pompe hydraulique (7) entraînée par le moteur à combustion interne (2), laquelle peut fonctionner comme pompe et moteur, la pompe hydraulique (7), en fonctionnement de pompe, aspirant un fluide sous pression hors d'un réservoir (9) par un côté d'aspiration et le refoulant dans une conduite de refoulement (10) guidée jusqu'au système hydraulique de travail (4) et, en fonctionnement de moteur, dans lequel la pompe hydraulique (7) est réalisée sous forme de démarreur hydraulique d'une fonction Start-Stop servant au démarrage du moteur à combustion interne (2), du fluide sous pression pouvant être acheminé à la pompe hydraulique (7) à partir d'un accumulateur de fluide sous pression (25) sur le côté d'aspiration, une conduite de liaison (26) guidée jusqu'à l'accumulateur de fluide sous pression (25) étant raccordée à la conduite de refoulement (10) de la pompe hydraulique (7) guidée jusqu'au système hydraulique de travail (4), une soupape d'arrêt (30) s'ouvrant automatiquement et en fonction de la pression en direction de l'accumulateur de fluide sous pression (26), en particulier une soupape anti-retour (31) s'ouvrant en direction de l'accumulateur de fluide sous pression (25), étant disposée dans la conduite de liaison (26) et une soupape de limitation de pression (32) étant associée à la conduite de liaison (26) entre la soupape d'arrêt (30) et l'accumulateur de fluide sous pression (25), laquelle soupape de limitation de pression protège la pression de charge présente dans l'accumulateur de fluide sous pression (25), **caractérisé en ce que** la pompe hydraulique (7) est prévue pour l'alimentation d'un dispositif de direction hydraulique et une soupape de priorité (12) servant à l'alimentation préférée du système hydraulique de direction est associée au côté de refoulement de la pompe hydraulique (7), système hydraulique de direction auquel la conduite de refoulement (10) du système hydraulique de travail (4) est raccordée côté sortie.

2. Véhicule selon la revendication 1, **caractérisé en ce qu'**un dispositif d'étranglement (33), en particulier un diaphragme ou un étranglement, est disposé dans la conduite de liaison (26).

3. Véhicule selon la revendication 1 ou 2, **caractérisé en ce qu'**une soupape de charge (27) étranglant la conduite de refoulement (10) et servant au chargement de l'accumulateur de fluide sous pression (25) est disposée dans la conduite de refoulement (10), guidée jusqu'au système hydraulique de travail (4), de la pompe hydraulique (7) et la conduite de liaison (26) est raccordée à la conduite refoulement (10) en amont de la soupape de charge (27).

4. Véhicule selon la revendication 3, **caractérisé en ce que** la soupape de charge (27) est réalisée sous forme de soupape retardatrice (28) qui, lors du fonctionnement de freinage du véhicule, est actionnée dans une position d'étranglement étranglant la conduite refoulement (10).

5. Véhicule selon l'une des revendications 1 à 4, **caractérisé en ce que** la liaison de l'accumulateur de fluide sous pression (25) au côté d'aspiration de la pompe hydraulique (7) peut être commandée au moyen d'une soupape de commande (35) pouvant être actionnée électriquement.

6. Véhicule selon la revendication 5, **caractérisé en ce que** la soupape de commande (35) est disposée dans une conduite de dérivation (36) qui est guidée à partir de la conduite de liaison (26) entre la soupape d'arrêt (30) et l'accumulateur de fluide sous pression (25) jusqu'à une conduite d'aspiration (8) de la pompe hydraulique (7) qui est guidée à partir du réservoir (9) jusqu'au côté d'aspiration de la pompe hydraulique (7).

7. Véhicule selon la revendication 6, **caractérisé en ce qu'**une soupape d'arrêt (37) bloquant en direction du réservoir (9), en particulier une soupape anti-retour (38) bloquant en direction du réservoir, est disposée dans la conduite d'aspiration (8) guidée à partir du réservoir (9) jusqu'au côté d'aspiration de la pompe hydraulique (7) .

8. Véhicule selon l'une des revendications 1 à 7, **caractérisé en ce qu'**un capteur de pression (34) est associé à la conduite de liaison (26) entre la soupape d'arrêt (30) et l'accumulateur de fluide sous pression (25) .

9. Véhicule selon l'une des revendications 1 à 8, **caractérisé en ce qu'**une pompe d'alimentation (20) entraînée par le moteur à combustion interne (2) est prévue, laquelle peut fonctionner comme pompe et moteur, la pompe d'alimentation (20), en fonctionnement de pompe, aspirant un fluide sous pression hors d'un réservoir (9) par un côté d'aspiration et le refoulant dans une conduite sous pression d'alimentation (22) guidée jusqu'à un circuit d'alimentation (23) et, en fonctionnement de moteur, du fluide sous pression pouvant être acheminé à la pompe d'alimentation (20) à partir de l'accumulateur de fluide sous pression (25) sur le côté d'aspiration.

10. Véhicule selon la revendication 9, **caractérisé en ce que** la liaison de l'accumulateur de fluide sous pression (25) au côté d'aspiration de la pompe d'alimentation (20) peut être commandée au moyen d'une autre soupape de commande (45) pouvant être actionnée électriquement.

11. Véhicule selon la revendication 10, **caractérisé en ce que** l'autre soupape de commande (45) est disposée dans une conduite de dérivation (46) qui est guidée à partir de la conduite de liaison (26) entre la soupape d'arrêt (30) et l'accumulateur de fluide sous pression (25) jusqu'à une conduite d'aspiration (21) de la pompe d'alimentation (20) qui est guidée à partir du réservoir (9) jusqu'au côté d'aspiration de la pompe d'alimentation (20).

12. Véhicule selon la revendication 11, **caractérisé en ce qu'**une soupape d'arrêt (47) bloquant en direction du réservoir, en particulier une soupape anti-retour (48) bloquant en direction du réservoir (9), est disposée dans la conduite d'aspiration (21) guidée à partir du réservoir (9) jusqu'au côté d'aspiration de la pompe d'alimentation (20).

13. Véhicule selon la revendication 9, **caractérisé en ce que** la pompe hydraulique (7) du système hydraulique de travail (4) et la pompe d'alimentation (20) comprennent un canal d'aspiration (50) commun, qui relie le côté d'aspiration de la pompe hydraulique (7) et le côté d'aspiration de la pompe d'alimentation (20) au réservoir (9) et dans lequel une soupape d'arrêt (51) bloquant en direction du réservoir (9), en particulier une soupape anti-retour (52) bloquant en direction du réservoir (9), est disposée, l'accumulateur de fluide sous pression (25) pouvant être relié au canal d'aspiration (50) commun de la pompe hydraulique (7) et de la pompe d'alimentation (20) au moyen d'une soupape de commande (55) commune pouvant être actionnée électriquement.

14. Véhicule selon la revendication 13, **caractérisé en ce que** la soupape de commande (55) commune est disposée dans une conduite de dérivation (56) qui est guidée à partir de la conduite de liaison (26) entre la soupape d'arrêt (30) et l'accumulateur de fluide sous pression (25) jusqu'au canal d'aspiration (50) commun de la pompe hydraulique (7) et de la pompe d'alimentation (20).

15. Véhicule selon l'une des revendications 9 à 14, **caractérisé en ce que** la pompe d'alimentation (20) est réalisée sous forme de démarreur hydraulique servant au démarrage du moteur à combustion interne (2) et/ou sous forme d'entraînement d'appoint servant à fournir un couple à la chaîne cinématique (1) entraînée par le moteur à combustion interne (2) tournant.

16. Véhicule selon l'une des revendications 1 à 15, **caractérisé en ce que** la pompe hydraulique (7) du système hydraulique de travail (4) est réalisée sous forme de pompe à cylindrée constante présentant un volume de refoulement fixe ou sous forme de pompe à cylindrée variable présentant un volume de refoulement réglable.

17. Véhicule selon l'une des revendications 1 à 16, **caractérisé en ce que** la pompe hydraulique (7) est réalisée sous forme de machine à pistons axiaux ou sous forme de machine à piston radiaux ou sous forme de machine à engrenages.
